# FASCICULE DE BREVET EUROPEEN

(11) **EP 1 702 821 B1**
(45) Date de publication et mention de la délivrance du brevet: **10.10.2007**
(21) Numéro de dépôt: 06300131.7
(22) Date de dépôt: 14.02.2006
(51) Int. Cl.: B60T 7/04, B60Q 1/44

(54) **Procédé de gestion d'information de freinage**
Verfahren zur Weiterbehandlung von Bremsinformation
Process for handling braking information

(30) Priorité: 15.03.2005 FR 0502525
(43) Date de publication de la demande: 20.09.2006
(73) Titulaire: RENAULT S.A.S., 92100 Boulogne Billancourt (FR)
(72) Inventeur: Dang van Nhan, Christophe M., 94800 VILLEJUIF (FR); Swierta, Agnès, 75006 PARIS (FR)

(56) Documents cités:
- GB-A- 1 194 928
- US-A- 5 016 587
- US-A- 5 156 444
- US-A- 5 954 407

## Description

La présente invention concerne, de façon générale, un procédé de gestion d'information de freinage pour véhicule automobile.

Plus particulièrement, l'invention concerne un procédé de gestion d'information de freinage pour un dispositif comprenant des premier et second capteurs reliés à une unité de commande et adaptés pour capter des informations de positionnement d'une pédale de frein mobile entre des positions relâchée et d'enfoncement ;
le procédé comprenant :
- la transmission à l'unité de commande, par le premier capteur, d'un premier signal « d'appui » de la pédale lorsque celle-ci est située entre une première position d'enfoncement et une position d'enfoncement total et d'un premier signal de « non-appui » lorsque la pédale est soit relâchée soit disposée entre la première position d'enfoncement et une position relâchée,
- la transmission à l'unité de commande, par le second capteur, d'un second signal « d'appui » de la pédale lorsque celle-ci est située entre une seconde position d'enfoncement et ladite position d'enfoncement total et d'un second signal de « non-appui » lorsque la pédale est soit relâchée soit disposée entre la seconde position d'enfoncement et ladite position relâchée,
- le traitement des signaux transmis à l'unité de commande comprenant une étape d'indication d'un état du dispositif de freinage parmi plusieurs états pouvant être pris par le dispositif.

De nombreux véhicules sont équipés de moyens permettant de détecter des positions d'enfoncement de la pédale de frein et de transmettre ces informations à d'autres systèmes du véhicule, tels que le système de freinage, le contrôle moteur, la boîte à vitesses automatique. Il est important de faire en sorte que l'information de freinage transmise soit juste, c'est-à-dire qu'elle corresponde à une réalité d'actionnement de la pédale.

C'est la raison pour laquelle de nombreux fabricants de véhicules ont développé diverses solutions visant à réduire le risque d'erreur dans l'indication d'un état du dispositif de freinage parmi plusieurs états que peut adopter le dispositif.

Un procédé de gestion d'information de freinage du type précédemment défini, permettant une telle indication de l'état du dispositif de freinage, est par exemple décrit dans le document brevet US 5, 016, 587.

Ce procédé consiste à disposer deux capteurs de deux positions différentes d'enfoncement d'une pédale puis à observer les commutations respectives de ces deux capteurs lors de l'enfoncement de ladite pédale de frein. Lors de l'enfoncement de la pédale, l'un des deux capteurs émet un signal toujours avant le second puis le second capteur émet un second signal une fois que la pédale est effectivement passée de sa première à sa seconde position.

Selon ce document, si un temps de plus de 20 secondes s'écoule à partir du moment de la réception du premier signal sans qu'aucun second signal ne soit émis alors le dispositif est considéré comme défaillant.

Dans ce contexte, la présente invention a pour but de proposer un procédé de gestion d'information de freinage permettant également d'indiquer un état du dispositif et permettant de réduire le risque de transmission d'une indication d'état erronée.

A cette fin, le procédé de l'invention, par ailleurs conforme à la définition générique qu'en donne le préambule défini précédemment, est essentiellement caractérisé en ce que quels que soient les signaux émis par le second capteur, on génère une première information dite de « premier capteur figé » si le signal émis par le premier capteur est jugé incohérent par rapport à une première règle préétablie et en ce que quels que soient les signaux émis par le premier capteur, on génère une seconde information dite de « second capteur figé » si le signal émis par le second capteur est jugé incohérent par rapport à une seconde règle pré-établie.

Il est à noter que le terme « signal » désigne un niveau logique. Ainsi, un signal électrique nul peut tout de même représenter un signal au sens la présente invention. Par exemple un signal de « non appui » peut être caractérisé par un niveau électrique de 0 Volts à la sortie du capteur transmettant ce signal de « non-appui ». Chaque capteur génère au moins deux niveaux logiques différents l'un de l'autre et notés S1 et *S̅*1̅ pour les signaux générés par le premier capteur et notés S2 et S2 pour les signaux générés par le second capteur.

Grâce au procédé selon l'invention, chaque signal provenant d'un capteur donné est traité indépendamment des signaux émis par l'autre capteur et selon une règle pré-établie particulière. Si un signal émis par un capteur est jugé incohérent par rapport à cette règle pré-établie, alors une information (respectivement première ou deuxième information selon qu'il s'agisse respectivement d'une incohérence du premier ou du second signal) est générée permettant ainsi d'identifier une défaillance d'un capteur sans avoir forcément à prendre en compte une information provenant de l'autre capteur. Un autre avantage de l'invention est qu'elle peut s'appliquer à un grand nombre de dispositifs possédant au moins deux capteurs de position pédale. Le positionnement relatif d'un capteurs par rapport à l'autre pour permettre de générer un ordre particulier des signaux lors de l'enfoncement de la pédale n'est pas forcément requis puisque l'incohérence d'un signal provenant d'un capteur est détectée selon une règle pré-établie et sans prendre en compte les signaux provenant de l'autre capteur. L'invention permet de s'affranchir de problèmes liés au réglage en position d'un capteur par rapport à un autre pour que l'un des capteurs se déclenche avant l'autre ou pour qu'ils se déclenchent simultanément dans une position pédale donnée. Grâce à l'invention, il est donc possible de générer une information signalant une incohérence de signal, même dans des cas d'un dérèglement des positions de déclenchement de capteurs.

Egalement, grâce à l'invention, le risque de générer une fausse information de signal incohérent est réduit car chaque signal provenant d'un capteur donné est analysé indépendamment des signaux provenant de l'autre capteur qui peuvent parfois être erronés.

On peut par exemple faire en sorte que lesdites première et seconde règles préétablies soient identiques entre elles.

On peut également faire en sorte que la première et/ou la seconde règle pré-établie consiste au moins à générer l'information correspondante, si le signal provenant du capteur correspondant est resté inchangé pendant un premier temps donné prédéterminé.

L'expression « resté inchangé » signifie qu'il n'y a pas eu de changement d'état logique du signal pendant l'intervalle de temps concerné. Ledit premier temps donné prédéterminé est par exemple d'une dizaine d'heures d'utilisation pour des véhicules se déplaçant sur de longs trajets sans freiner ou peut-être plus court pour d'autres véhicules tels que des véhicules urbains.

Le premier temps donné prédéterminé est préférentiellement un intervalle mesuré pendant le temps de fonctionnement du véhicule, c'est-à-dire dès que celui-ci se déplace ou dès que le moteur est mis en route. Pour cela, l'unité de commande est adaptée pour savoir lorsque le véhicule est utilisé.

Si le signal émis par l'un des capteurs ne change pas pendant un temps donné alors il y a une grande chance pour que ce capteur soit figé. Le signal émis par un capteur figé n'est pas représentatif de la réalité de positionnement de la pédale. Un tel signal de capteur figé ne doit préférentiellement pas être pris en compte pour l'indication de certains états du dispositif. Grâce à l'invention un signal émis par un capteur défaillant est aisément détecté.

On peut également faire en sorte que la première et/ou la second règle pré-établie consiste au moins à générer l'information correspondante, si le signal provenant du capteur correspondant change trop souvent pendant un second temps donné prédéterminé.

Il est en effet possible d'identifier une incohérence de signal si celui-ci change trop souvent d'état logique dans un temps donné.

On peut également faire en sorte que la première et/ou la seconde règle pré-établie comporte une opération de confirmation de signal incohérent préalable à la génération de l'information, cette opération de confirmation consistant à observer le signal jugé incohérent pendant un troisième temps prédéterminé et à générer l'information si ledit signal est toujours incohérent à l'issue du troisième temps prédéterminé.

On peut par exemple faire en sorte que le traitement desdits signaux par l'unité de commande comprenne une étape d'indication :
- d'un premier état « d'appui confirmé » lorsque l'unité de commande reçoit les premier et second signaux d'appui ;
- d'un second état de « non-appui » lorsque l'unité de commande reçoit les premier et second signaux de non-appui ;
- et d'un troisième état « d'appui » lorsque l'unité de commande ne reçoit qu'un seul desdits premier et second signaux d'appui.

Préférentiellement, on peut faire en sorte qu'en cas de génération d'une seule des dites première ou seconde informations l'unité de commande détermine l'état du dispositif, uniquement en fonction du signal cohérent qu'elle reçoit, en ne prenant pas en compte l'autre signal incohérent pour la détermination dudit état du dispositif.

Un signal reçu est toujours interprété par l'unité de commande à l'aide de la règle pré-établie et ce signal est soit jugé cohérent, dans ce cas l'information (première et/ou seconde information) n'est pas émise, soit jugé incohérent, dans ce dernier cas l'information (première et/ou seconde information) est émise. Si un seul des premier et second signaux est cohérent, alors lui seul est pris en compte pour la détermination de l'état du dispositif.

On peut faire en sorte qu'en cas de génération simultanée des dites première et seconde informations alors l'unité de commande indique que le dispositif est dans un quatrième état dit « état indisponible ».

On peut également faire en sorte que chaque état indiqué du dispositif soit codé sur trois bits par l'unité de commande et que chacun des états indiqués possède un code propre différent d'un autre code propre à un autre état du dispositif.

Grâce à ce mode de réalisation de l'invention on peut définir des états du dispositif de freinage à partir des signaux provenant des capteurs et indiquer ces états à l'aide de codes sur au moins trois bits. Ces états du dispositif sont alors disponibles pour d'autres systèmes du véhicule tels que le moteur, la boite à vitesses automatique sans qu'il n'y ait d'ambiguïté sur l'état du dispositif.

On peut également faire en sorte que chaque code propre correspondant à un état donné du dispositif diffère d'au moins deux bits par rapport à n'importe quel autre code propre correspondant à un autre état du dispositif.

Ce mode de réalisation permet de réduire les risques de mauvaise interprétation des codes générés par l'unité de commande, car il faut au moins changer deux bits d'un code pour retrouver un autre code correspondant à un autre état du dispositif.

D'autres caractéristiques et avantages de l'invention ressortiront clairement de la description qui en est faite ci-après, à titre indicatif et nullement limitatif, en référence aux dessins annexés, dans lesquels:
la figure 1 représente un schéma des conditions de changement de mode de fonctionnement du dispositif géré selon le procédé de l'invention ;
la figure 2 représente un mode de fonctionnement nominal du dispositif géré selon le procédé de l'invention ;
la figure 3 représente un premier mode dégradé de fonctionnement du dispositif géré selon le procédé de l'invention ;
la figure 4 représente un second mode dégradé de fonctionnement du dispositif géré selon le procédé de l'invention ;
la figure 5 représente un schéma logique d'un circuit permettant la mise en oeuvre du procédé selon l'invention ;
la figure 6 est une matrice des codes d'états du dispositif générés par le circuit de la figure 5 en fonction des signaux émis par les capteurs.

Comme annoncé précédemment, l'invention concerne un procédé de gestion d'information de freinage pour un véhicule.

Deux capteurs sont disposés pour transmettre des signaux de positionnement relatif de la pédale de frein du véhicule.

Le premier capteur émet un premier signal d'appui lorsque la pédale est enfoncée au-delà d'une première position d'enfoncement et un premier signal de non-appui lorsque la pédale n'est pas enfoncée ou n'est pas suffisamment enfoncée pour atteindre la première position d'enfoncement.

Le second capteur émet un second signal d'appui lorsque la pédale est enfoncée au-delà d'une seconde position d'enfoncement et un second signal de non-appui lorsque la pédale n'est pas enfoncée ou n'est pas suffisamment enfoncée pour atteindre la seconde position d'enfoncement. Chaque capteur transmet ses signaux à l'unité de commande par un bus dédié. Chaque signal est enregistré sur une mémoire du dispositif puis analysé pour détecter une éventuelle incohérence du signal par rapport à une règle pré-établie Fd1 et/ou Fd2.

Le test de cohérence Fd1 et Fd2 peuvent consister à émettre une information F1, F2 signalant qu'un signal est incohérent si pendant une période de temps donnée prédéterminée aucune transition entre les premiers signaux « d'appui » et de « non-appui » n'est constatée et/ou si un trop grand nombre de transitions est observé.

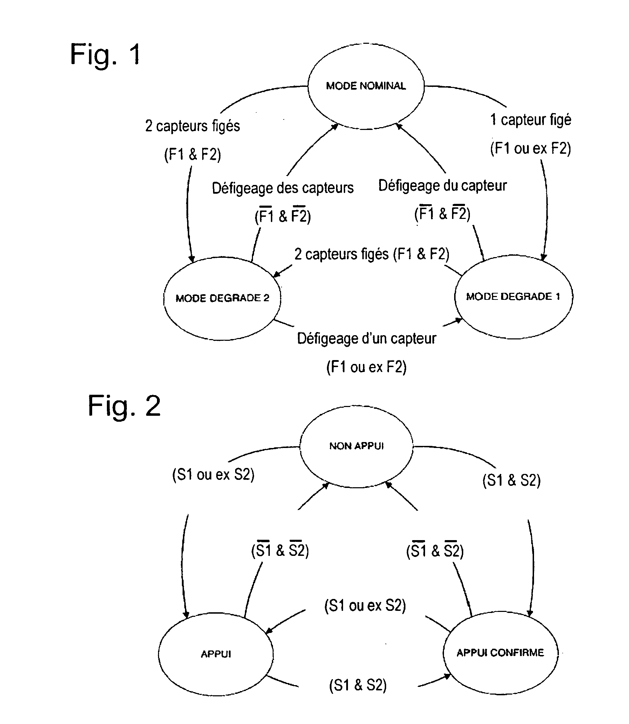

Selon le procédé de l'invention, le dispositif de freinage peut fonctionner dans trois modes représentés à la figure 1.

Le premier mode de fonctionnement est un mode nominal selon le procédé de l'invention. Ce mode est courant lorsque les signaux provenant des deux capteurs sont chacun considérés comme cohérent selon la règle pré-établie correspondante à chaque signal analysé.

Le second mode de fonctionnement est un premier mode dégradé selon le procédé de l'invention. Ce mode est courant lorsqu'un seul des signaux provenant d'un des deux capteurs est considéré comme incohérent selon une règle pré-établie correspondante au signal analysé et lorsque l'autre signal provenant de l'autre capteur est considéré comme cohérent selon une autre règle pré-établie.

Le troisième mode de fonctionnement est un second mode dégradé selon le procédé de l'invention. Ce mode est courant lorsque les deux signaux provenant des deux capteurs sont considérés comme incohérents selon les règles pré-établie correspondantes à chaque signal analysé.

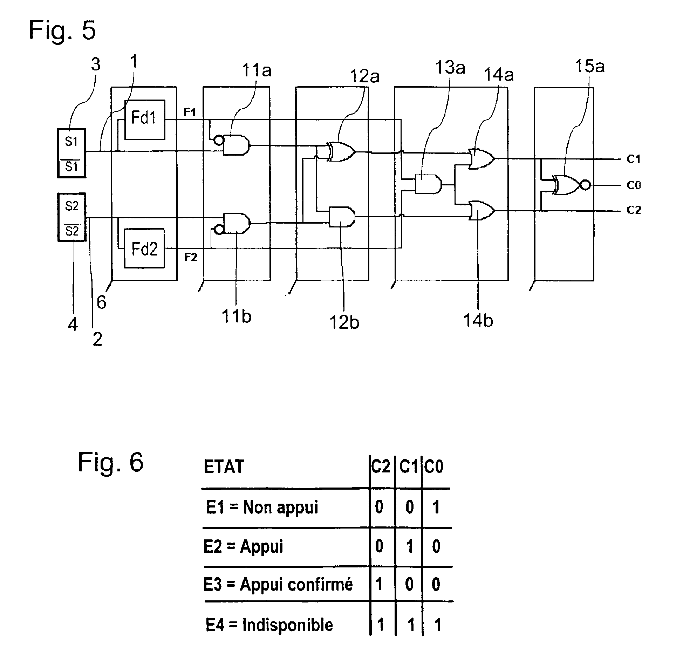

Sur les figures 1 et 5, F1 est une première information qui indique que le signal S1 ou *S̅*1̅ provenant du premier capteur est incohérent par rapport à une première règle pré-établie Fd1.

F2 est une seconde information qui indique que le signal S2 ou S2 provenant du second capteur est incohérent par rapport à une seconde règle pré-établie Fd2. selon un mode particulier de l'invention les règles Fd1 et Fd2 peuvent être identiques entre elles.

Le passage en mode nominal peut se faire depuis n'importe quel autre mode dès que les signaux provenant des deux capteurs sont considérés comme cohérents.

Le passage en premier mode dégradé peut également se faire depuis n'importe quel autre mode dès qu'un signal est incohérent et que l'autre signal est jugé cohérent.

Le passage en second mode dégradé peut également se faire depuis n'importe quel autre mode dès que deux signaux sont simultanément considérés comme incohérents.

L'unité de commande peut générer une information d'alerte pour l'utilisateur du dispositif de freinage lorsque au moins une incohérence est détectée. Un telle alerte peut par exemple être réalisée par allumage d'un témoin lumineux.

La figure 2 représente les états indiqués par le dispositif géré selon le procédé de l'invention lorsque ce dispositif est en état nominal de fonctionnement.

Trois états alternatifs d'appui, de non-appui, ou d'appui confirmé sont indiqués en fonction des signaux reçus par l'unité de commande.

L'état non appui est indiqué si les signaux émis par les deux capteurs sont des signaux de non-appui *S̅*1̅, *S̅*2̅.

L'état d'appui est indiqué si à un instant donné, un seul des deux capteurs émet un signal d'appui S1 ou S2.

L'état appui confirmé est généré si les deux capteurs émettent simultanément des signaux d'appui S1 et S2.

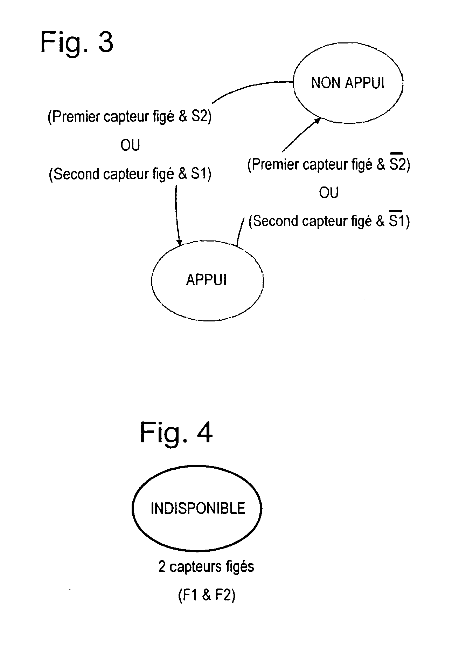

La figure 3 représente le premier mode dégradé ou mode dégradé 1, c'est-à-dire qu'un seul des capteurs est considéré comme figé et transmettant un signal incohérent.

Dans ce premier mode dégradé, seulement deux états du dispositif, alternatifs l'un de l'autre, peuvent être indiqués, c'est-à-dire l'état d'appui et l'état de non-appui.

L'état d'appui est indiqué si le seul signal cohérent émis est un signal d'appui S1 OU S2.

L'état de non appui est indiqué si le seul signal cohérent est un signal de non-appui *S̅*1̅ ou *S̅*2̅. Dans ce mode dégradé, le signal incohérent n'est pas pris en compte pour la détermination de l'état à indiquer.

La figure 4 représente le second mode de fonctionnement dégradé. Dans ce mode, un seul état est indiqué, il s'agit de l'état indisponible. Cet état est indiqué lorsque les deux capteurs transmettent chacun un signal jugé incohérent.

Un signal peut être incohérent s'il est resté invariant pendant un temps donné prédéterminé, durant le fonctionnement du véhicule.

Une mémoire peut être utilisée pour enregistrer un historique des signaux de chaque capteur. Cette mémoire est bien entendu couplée avec une horloge ou avec tout autre moyen représentant un temps de fonctionnement du véhicule.

Grâce au procédé de l'invention, après avoir utilisé le véhicule, on sait, pour chaque capteur, depuis combien de temps le signal émis par ce capteur est resté invariant. Le temps de signal invariant est conservé en mémoire durant la non-utilisation du véhicule puis ré-incrémenté lorsque l'on réutilise le véhicule. La ré-incrémentation se fait en repartant du temps total tel que mémorisé en fin d'utilisation du véhicule.

La figure 5 représente un schéma logique d'un circuit 5 pour la mise en oeuvre du procédé selon l'invention.

Deux bus 1 et 2 sont respectivement reliés aux premier et second capteurs respectifs 3 et 4. Chaque capteur génère un seul signal à un instant donné. Pour le premier capteur 3, les signaux sont un premier signal d'appui S1 et un premier signal de non-appui *S̅*1̅.

Pour le second capteur 4, les signaux émis sont un second signal d'appui S2 et un second signal de non-appui *S̅*2̅.

Un module 6 du circuit 5 permet d'analyser chaque signal reçu par le circuit pour déterminer sa cohérence par rapport à une règle Fd1 pour les signaux du premier capteur et par rapport à une règle Fd2 pour les signaux du second capteur.

Pour cela le module 6 comporte deux blocs tests Fd1 et Fd2 séparés et respectivement reliés au bus 1 et 2 des capteurs 3 et 4.

La sortie du bloc Fd1 est reliée à une entrée inversée d'une porte logique ET 11a et l'autre entrée de cette porte logique ET 11a est reliée au premier capteur 3 par le bus 1.

La sortie de la porte logique ET 11a est reliée à une première entrée d'une porte logique OU exclusif 12a ainsi qu'à une première entrée d'une porte logique ET 12b.

De façon symétrique, la sortie du bloc Fd2 est reliée à une entrée inversée d'une porte logique ET 11b et l'autre entrée de cette porte logique ET 11b est reliée au second capteur 4 par le bus 2.

La sortie de la porte logique ET 11b est reliée à une seconde entrée de la porte logique OU exclusif 12a ainsi qu'à une seconde entrée de la porte logique ET 12b.

Chacune des sorties des blocs Fd1 et Fd2 sont reliées à des entrées respectives d'une porte logique 13a.

Si chaque capteur émet un signal considéré incohérent alors les blocs Fd1 et Fd2 émettent respectivement en sortie des première et seconde informations F1 et F2. Si les sorties des deux blocs Fd1 et Fd2 sont respectivement F1 et F2, alors les deux entrées de la porte logique 13a sont à 1 et la sortie de cette porte logique passe également à 1 indiquant que les deux signaux reçus par l'unité de commande sont incohérents.

La sortie de la porte OU exclusif 12a est reliée à une première entrée d'une porte OU inclusif 14a et la sortie de la porte ET 13a est reliée à l'autre entrée de la porte OU inclusif 14a. La sortie de cette porte OU inclusif 14a constitue un premier bit C1 pour le codage sur trois bits de l'état du dispositif 5.

La sortie de la porte ET 12b est reliée à une première entrée d'une porte OU inclusif 14b et la sortie de la porte ET 13a est reliée à l'autre entrée de la porte OU inclusif 14b. La sortie de cette porte OU inclusif 14b constitue un second bit C2 pour le codage sur trois bits de l'état du dispositif 5.

Chaque sortie de chaque porte OU inclusif 14a et 14b constitue une entrée respective d'une porte OU exclusif 15a possédant une sortie inversée C0. Cette sortie inversée C0 constitue un troisième bit C0 pour le codage sur trois bits de l'état du dispositif 5.

La figure 6 représente la table de codage en trois bits C0, C1, C2, de chaque état pouvant être adopté par le dispositif 5.

L'état E1 est l'état de non appui et est codé par le bit C0 à 1 et les bits C1 et C2 tous deux à 0.

L'état E2 est l'état d'appui et est codé par le bit C1 à 1 et les bits C0 et C2 à 0.

L'état E3 est l'état d'appui confirmé et est codé par le bit C2 à 1 et les bits C0 et C1 à 0.

L'état E4 est l'état indisponible et est codé par l'ensemble des bits C0, C1, C2 à 1.

Grâce au procédé de l'invention et à ce circuit chaque code d'état diffère d'un autre code d'état par au moins deux bits ce qui réduit le risque de confusion entre les états codés.

## Revendications

1. Procédé de gestion d'information de freinage pour un dispositif comprenant des premier et second capteurs reliés à une unité de commande et adaptés pour capter des informations de positionnement d'une pédale de frein mobile entre des positions relâchée et d'enfoncement ;
le procédé comprenant :
- la transmission à l'unité de commande, par le premier capteur, d'un premier signal « d'appui » (S1) de la pédale lorsque celle-ci est située entre une première position d'enfoncement et une position d'enfoncement total et d'un premier signal de « non-appui » (*̅S̅*̅1̅) lorsque la pédale est soit relâchée soit disposée entre la première position d'enfoncement et une position relâchée,
- la transmission à l'unité de commande, par le second capteur d'un second signal « d'appui » (S2) de la pédale lorsque celle-ci est située entre une seconde position d'enfoncement et ladite position d'enfoncement total et d'un second signal de « non-appui » (*̅S̅*̅2̅) lorsque la pédale est soit relâchée soit disposée entre la seconde position d'enfoncement et ladite position relâchée,
- le traitement des signaux transmis à l'unité de commande comprenant une étape d'indication d'un état du dispositif de freinage parmi plusieurs états (E1, E2, E3, E4) pouvant être pris par le dispositif, **caractérisé en ce que** quels que soient les signaux émis par le second capteur (S2, *̅S̅*̅2̅), on génère une première information (F1) (dite de « premier capteur figé ») si le signal (S1, *̅S̅*̅1̅) émis par le premier capteur est jugé incohérent par rapport à une première règle préétablie (Fd1) et **en ce que** quels que soient les signaux émis par le premier capteur (S1, *̅S̅*̅1̅), on génère une seconde information (F2) (dite de second capteur figé ») si le signal émis par le second capteur (S2, *̅S̅*̅2̅) est jugé incohérent par rapport à une seconde règle pré-établie (Fd2).

2. Procédé selon la revendication 1, **caractérisé en ce que** lesdites première et seconde règles préétablies (Fd1, Fd2) sont identiques entre elles.

3. Procédé selon l'une quelconque des revendications 1 ou 2, **caractérisé en ce que** la première et/ou la second règle pré-établie consiste au moins à générer l'information correspondante (F1, F2), si le signal provenant du capteur correspondant est resté inchangé pendant un premier temps donné prédéterminé.

4. Procédé selon l'une quelconque des revendications 1 à 3, **caractérisé en ce que** la première et/ou la second règle pré-établie consiste au moins à générer l'information correspondante (F1, F2), si le signal provenant du capteur correspondant change trop souvent pendant un second temps donné prédéterminé.

5. Procédé selon l'une quelconque des revendications 3 ou 4, **caractérisé en ce que** la première et/ou la seconde règle pré-établie comporte une opération de confirmation de signal incohérent préalable à la génération de l'information (F1, F2), cette opération de confirmation consistant à observer le signal jugé incohérent pendant un troisième temps prédéterminé et à générer l'information (F1, F2) si ledit signal est toujours incohérent à l'issue du troisième temps prédéterminé.

6. Procédé selon l'une quelconque des revendications 1 à 5, **caractérisé en ce que** le traitement desdits signaux par l'unité de commande comprend une étape d'indication :
- d'un premier état « d'appui confirmé » lorsque l'unité de commande reçoit les premier et second signaux d'appui ;
- d'un second état de « non-appui » lorsque l'unité de commande reçoit les premier et second signaux de non-appui ;
- et d'un troisième état « d'appui » lorsque l'unité de commande ne reçoit qu'un seul desdits premier et second signaux d'appui.

7. Procédé selon l'une quelconque des revendications 1 à 6, **caractérisé en ce qu**'en cas de génération d'une seule des dites première ou seconde informations l'unité de commande détermine l'état du dispositif, uniquement en fonction du signal cohérent quelle reçoit, en ne prenant pas en compte l'autre signal incohérent pour la détermination dudit état du dispositif.

8. Procédé selon l'une quelconque des revendications 1 à 7, **caractérisé en ce qu**'en cas de génération simultanée des dites première et seconde informations alors l'unité de commande indique que le dispositif est dans un quatrième état dit « état indisponible ».

9. Procédé selon l'une quelconque des revendications 1 à 8, **caractérisé en ce que** chaque état indiqué du dispositif est codé sur trois bits (C0, C1, C2) par l'unité de commande et **en ce que** chacun des états indiqués possède un code propre différent à un autre code propre d'un autre état du dispositif.

10. Procédé selon la revendication 9, **caractérisé en ce que** chaque code propre correspondant à un état donné du dispositif diffère d'au moins deux bits par rapport à n'importe quel autre code propre correspondant à un autre état du dispositif.

## Claims

1. Method of managing braking information for a device comprising first and second sensors linked to a control unit and designed to sense positioning information concerning a brake pedal moving between released and depressed positions; the method comprising:
- the transmission to the control unit, by the first sensor, of a first pedal "press" signal (S1) when the pedal is located between a first depressed position and a fully depressed position and a first "non-press" signal (*̅S̅*̅1̅) when the pedal is either released or disposed between the first depressed position and a released position,
- the transmission to the control unit, by the second sensor, of a second pedal "press" signal (S2) when the pedal is located between a second depressed position and said fully depressed position and a second "non-press" signal (*̅S̅*̅2̅) when the pedal is either released or disposed between the second depressed position and said released position,
- the processing of the signals transmitted to the control unit including a step for indicating a state of the braking device out of a number of states (E1, E2, E3, E4) that can be adopted by the device, **characterized in that** whatever the signals sent by the second sensor (S2, *̅S̅*̅2̅), a first information item (F1) (so-called "first frozen sensor") is generated if the signal (S1, *̅S̅*̅1̅) sent by the first sensor is deemed inconsistent in relation to a first pre-established rule (Fd1) and **in that** whatever the signals sent by the first sensor (S1, *̅S̅*̅1̅), a second information item (F2) (so-called "second frozen sensor") is generated if the signal sent by the second sensor (S2, *̅S̅*̅2̅) is deemed inconsistent in relation to a second pre-established rule (Fd2).

2. Method according to Claim 1, **characterized in that** said first and second pre-established rules (Fd1, Fd2) are mutually identical.

3. Method according to either Claim 1 or Claim 2, **characterized in that** the first and/or the second pre-established rule consists at least in generating the corresponding information item (F1, F2), if the signal originating from the corresponding sensor has remained unchanged for a first predetermined given time.

4. Method according to any one of Claims 1 to 3, **characterized in that** the first and/or the second pre-established rule consists at least in generating the corresponding information item (F1, F2), if the signal originating from the corresponding sensor changes too often during a second predetermined given time.

5. Method according to either Claim 3 or Claim 4, **characterized in that** the first and/or the second pre-established rule includes an inconsistent signal confirmation operation prior to the generation of the information item (F1, F2), this confirmation operation consisting in observing the signal deemed inconsistent for a third predetermined time and in generating the information item (F1, F2) if said signal is still inconsistent at the end of the third predetermined time.

6. Method according to any one of Claims 1 to 5, **characterized in that** the processing of said signals by the control unit includes a step for indicating:
- a first "press confirmed" state when the control unit receives the first and second press signals;
- a second "non-press" state when the control unit receives the first and second non-press signals;
- and a third "press" state when the control unit receives only one of said first and second press signals.

7. Method according to any one of Claims 1 to 6, **characterized in that**, if only one of said first or second information items is generated, the control unit determines the state of the device, solely according to the consistent signal that it receives, and not taking into account the other inconsistent signal for determining said state of the device.

8. Method according to any one of Claims 1 to 7, **characterized in that**, if said first and second information items are generated simultaneously, then the control unit indicates that the device is in a fourth so-called "unavailable" state.

9. Method according to any one of Claims 1 to 8, **characterized in that** each indicated state of the device is encoded on three bits (C0, C1, C2) by the control unit and **in that** each of the indicated states has a specific code that is different from another specific code of another state of the device.

10. Method according to Claim 9, **characterized in that** each specific code corresponding to a given state of the device differs by at least two bits from any other specific code corresponding to another state of the device.

## Patentansprüche

1. Verfahren zur Verwaltung von Bremsinformation für eine Vorrichtung, die erste und zweite Sensoren aufweist, die mit einer Steuereinheit verbunden und ausgelegt sind, um Positionierungsinformationen eines Bremspedals erfassen, das zwischen einer losgelassenen und eingedrückten Stellung beweglich ist;
wobei das Verfahren aufweist:
- die Übertragung an die Steuereinheit durch den ersten Sensor eines ersten "Drück"-Signals (S1) des Pedals, wenn dieses sich zwischen einer ersten Eindrückstellung und einer Stellung des vollständigen Eindrückens befindet, und eines ersten Signals des "Nicht-Drückens" (S̅1̅), wenn das Pedal entweder losgelassen oder zwischen der ersten Eindrückstellung und einer losgelassenen Stellung angeordnet ist,
- die Übertragung an die Steuereinheit durch den zweiten Sensor eines zweiten "Drück"-Signals (S2) des Pedals, wenn dieses sich zwischen einer zweiten Eindrückstellung und der Stellung des vollständigen Eindrückens befindet, und eines zweiten Signals des "Nicht-Drückens" (S̅2̅), wenn das Pedal entweder losgelassen oder zwischen der zweiten Eindrückstellung und der losgelassenen Stellung angeordnet ist,
- die Verarbeitung der an die Steuereinheit übertragenen Signale, die einen Schritt der Anzeige eines Zustands von mehreren Zuständen (E1, E2, E3, E4) der Bremsvorrichtung aufweist, die von der Vorrichtung angenommen werden können,
**dadurch gekennzeichnet, dass** unabhängig von den vom zweiten Sensor gesendeten Signalen (S2, *̅S̅*̅2̅) eine erste Information (F1) ("eines ersten bewegungslosen Sensors" genannt) erzeugt wird, wenn das vom ersten Sensor gesendete Signal (S1, S̅1̅) bezüglich einer ersten vorerstellten Regel (Fd1) als inkohärent beurteilt wird, und dass unabhängig von den vom ersten Sensor erzeugten Signalen (S1, S̅1̅) eine zweite Information (F2) ("eines zweiten bewegungslosen Sensors" genannt) erzeugt wird, wenn das vom zweiten Sensor (S2, S̅2̅) gesendete Signal bezüglich einer zweiten vorerstellten Regel (Fd2) als inkohärent beurteilt wird.

2. Verfahren nach Anspruch 1, **dadurch gekennzeichnet, dass** die erste und die zweite vorerstellte Regel (Fd1, Fd2) untereinander gleich sind.

3. Verfahren nach einem der Ansprüche 1 oder 2, **dadurch gekennzeichnet, dass** die erste und/oder die zweite vorerstellte Regel mindestens darin besteht, die entsprechende Information (F1, F2) zu erzeugen, wenn das vom entsprechenden Sensor kommende Signal während einer ersten vorbestimmten gegebenen Zeit unverändert geblieben ist.

4. Verfahren nach einem der Ansprüche 1 bis 3, **dadurch gekennzeichnet, dass** die erste und/oder die zweite vorerstellte Regel mindestens darin besteht, die entsprechende Information (F1, F2) zu erzeugen, wenn das vom entsprechenden Sensor kommende Signal sich während einer zweiten vorbestimmten gegebenen Zeit zu oft ändert.

5. Verfahren nach einem der Ansprüche 3 oder 4, **dadurch gekennzeichnet, dass** die erste und/oder die zweite vorerstellte Regel eine Operation der Bestätigung eines inkohärenten Signals vor der Erzeugung der Information (F1, F2) aufweist, wobei diese Bestätigungsoperation darin besteht, das als inkohärent beurteilte Signal während einer dritten vorbestimmten Zeit zu beobachten und die Information (F1, F2) zu erzeugen, wenn das Signal nach der dritten vorbestimmten Zeit immer noch inkohärent ist.

6. Verfahren nach einem der Ansprüche 1 bis 5, **dadurch gekennzeichnet, dass** die Verarbeitung der Signale durch die Steuereinheit einen Anzeigeschritt aufweist:
- eines ersten Zustands des "bestätigten Drückens", wenn die Steuereinheit das erste und das zweite Drück-Signal empfängt;
- eines zweiten Zustands des "Nicht-Drückens", wenn die Steuereinheit das erste und das zweite Signal des Nicht-Drückens empfängt;
- und eines dritten Zustands des "Drückens", wenn die Steuereinheit nur eines der ersten und zweiten Drück-Signale empfängt.

7. Verfahren nach einem der Ansprüche 1 bis 6, **dadurch gekennzeichnet, dass** im Fall der Erzeugung nur einer der ersten oder zweiten Informationen die Steuereinheit den Zustand der Vorrichtung nur in Abhängigkeit von dem kohärenten Signal bestimmt, das sie empfängt, indem sie das andere inkohärente Signal nicht für die Bestimmung des Zustands der Vorrichtung berücksichtigt.

8. Verfahren nach einem der Ansprüche 1 bis 7, **dadurch gekennzeichnet, dass** im Fall der gleichzeitigen Erzeugung der ersten und zweiten Informationen die Steuereinheit anzeigt, dass die Vorrichtung sich in einem vierten, so genannten "nicht verfügbaren" Zustand befindet.

9. Verfahren nach einem der Ansprüche 1 bis 8, **dadurch gekennzeichnet, dass** jeder angezeigte Zustand der Vorrichtung von der Steuereinheit mit drei Bits (C0, C1, C2) codiert wird, und dass jeder der angezeigten Zustände einen Eigencode besitzt, der sich von einem anderen Eigencode eines anderen Zustands der Vorrichtung unterscheidet.

10. Verfahren nach Anspruch 9, **dadurch gekennzeichnet, dass** jeder Eigencode, der einem gegebenen Zustand der Vorrichtung entspricht, sich um mindestens zwei Bits von einem beliebigen anderen Eigencode unterscheidet, der einem anderen Zustand der Vorrichtung entspricht.
